# EUROPÄISCHE PATENTANMELDUNG

(11) **EP 4 793 514 A1**
(43) Veröffentlichungstag der Anmeldung: **19.08.2026**
(21) Anmeldenummer: 25158267.2
(22) Anmeldetag: 17.02.2025
(51) Int. Cl.: F16B 23/00

(54) **SCHRAUBE UND ANTRIEBSELEMENT**

(71) Anmelder: Hilti Aktiengesellschaft, 9494 Schaan (LI)
(72) Erfinder: Wettstein, Andreas, 6800 Feldkirch (AT); Enderle, Sarah, 75449 Wurmberg (DE)
(74) Vertreter: Hilti Aktiengesellschaft Corporate Intellectual Property

(57) **Zusammenfassung**

Schraube zum Eintreiben in einen Untergrund, umfassend:
- einen Schraubenschaft,
- eine Längsachse entlang des Schraubenschafts,
- einen Schraubenkopf, wobei der Schraubenkopf eine Antriebsaufnahme zum Aufnehmen eines Antriebselements umfasst, wobei die Antriebsaufnahme
▪ einen ersten Kontaktbereich, wobei der erste Kontaktbereich ausgebildet ist einen Flankenbereich des Antriebselements zu kontaktieren,
▪ einen zweiten Kontaktbereich, wobei der zweite Kontaktbereich ausgebildet ist einen Einführungsbereich des Antriebselements zu kontaktieren,
▪ einen Fasenbereich, wobei der Fasenbereich zwischen dem ersten Kontaktbereich und dem zweiten Kontaktbereich angeordnet ist und ausgebildet ist eine Übertragung des Drehmoments im ersten Kontaktbereich und/oder im zweiten Kontaktbereich zu verstärken, umfasst.

## Beschreibung

Die vorliegende Erfindung betrifft eine Schraube zum Eintreiben in einen Untergrund und ein Antriebselement zum Eintreiben einer Schraube in einen Untergrund.

### Hintergrund

Die US2016305462 AA offenbart eine Schraube mit einem Antriebsmechanismus. Die Schraube offenbart dabei eine Fläche zum Kontaktieren eines Antriebselements und eine Fasenfläche. Die Schraube weist eine gute Drehmomentübertragung auf.

Die US2016059391 AA offenbart ein Antriebswerkzeug und eine Schraube. Das Antriebswerkzeug verfügt über keilförmige Vorsprünge, die die Schraube greifen. Die Schraube weist eine gute Stabilität auf.

Der Nachteil des Standes der Technik liegt darin, dass die Schrauben entweder eine hohe Drehmomentübertragung bieten oder eine hohe Stabilität.

Eine Aufgabe der vorliegenden Erfindung liegt darin, eine Schraube und ein Antriebselement zur Verfügung zu stellen, dass die Nachteile des Standes der Technik überwindet und sowohl eine sehr hohe Drehmomentübertragung als auch eine sehr hohe Stabilität der Schraube ermöglicht.

### Beschreibung

Ein erster Aspekt der Erfindung umfasst eine Schraube, zum Eintreiben in einen Untergrund, umfassend:
- einen Schraubenschaft,
- eine Längsachse entlang des Schraubenschafts,
- einen Schraubenkopf, wobei der Schraubenkopf eine Antriebsaufnahme zum Aufnehmen eines Antriebselements umfasst, wobei die Antriebsaufnahme
   ▪ einen ersten Kontaktbereich, wobei der erste Kontaktbereich ausgebildet ist einen Flankenbereich des Antriebselements zu kontaktieren,
   ▪ einen zweiten Kontaktbereich, wobei der zweite Kontaktbereich ausgebildet ist einen Einführungsbereich des Antriebselements zu kontaktieren,
   ▪ einen Fasenbereich, wobei der Fasenbereich zwischen dem ersten Kontaktbereich und dem zweiten Kontaktbereich angeordnet ist und ausgebildet ist eine Übertragung des Drehmoments im ersten Kontaktbereich und/oder im zweiten Kontaktbereich zu verstärken, umfasst.

Der Begriff "Schraubenkopf" beschreibt den oberen Teil einer Schraube, der über das Werkstück hinausragen kann. Er dient als Kontaktelement für das Werkzeug, das zum Eintreiben oder Lösen der Schraube verwendet wird. Ein Schraubenkopf kann unterschiedliche Formen annehmen, wie beispielsweise einen Sechskantkopf, Flachkopf, Rundkopf oder Senkkopf.

Der Begriff "Antriebsaufnahme" beschreibt den Bereich des Schraubenkopfes, der zur Aufnahme eines Werkzeugs (beispielsweise Schraubendreher oder Bit) ausgelegt ist. Die Antriebsaufnahme ermöglicht die Übertragung des Drehmoments vom Werkzeug auf die Schraube, wodurch das Einreiben oder Lösen der Schraube ermöglicht wird. Es existieren verschiedene Typen von Antriebsaufnahmen, darunter Schlitz, Kreuzschlitz, Innensechsrund und Innensechskant, die jeweils spezifische Vorteile und Anwendungsbereiche aufweisen.

Der Begriff "erster Kontaktbereich" beschreibt einen Bereich des Schraubenkopfes, insbesondere der Antriebsaufnahme, welcher ausgebildet ist, einen Flankenbereich des Antriebselements zu kontaktieren. Der Kontakt zwischen dem Flankenbereich des Antriebselements und dem Schraubenkopf kann dabei über mindestens einen Kontaktbereich oder über mehrere Kontaktbereiche erfolgen. Der mindestens eine oder die mehreren Kontaktbereiche können zusammenhängend oder räumlich getrennt voneinander angeordnet sein. Der erste Kontaktbereich ermöglicht die Übertragung eines Drehmoments vom Antriebselement auf die Schraube, wodurch das Anziehen, das Eintreiben oder Lösen der Schraube ermöglicht wird.

Der Begriff "zweiter Kontaktbereich" beschreibt einen Bereich des Schraubenkopfes, insbesondere der Antriebsaufnahme, welcher angeordnet ist und welcher ausgebildet ist, einen Einführungsbereich des Antriebselements zu kontaktieren. Der Kontakt zwischen dem Einführungsbereich des Antriebselements und dem Schraubenkopf kann dabei über mindestens einen Kontaktbereich oder über mehrere Kontaktbereiche erfolgen. Der mindestens eine oder die mehreren Kontaktbereiche können zusammenhängend oder räumlich getrennt voneinander angeordnet sein. Der zweite Kontaktbereich ermöglicht es die Übertragung des Drehmoments vom Antriebselement auf die Schraube zu verbessern und zu verstärken, wodurch das Anziehen, das Eintreiben oder Lösen der Schraube ermöglicht wird.

Der Begriff "Fasenbereich" beschreibt einen Bereich, der zwischen dem ersten Kontaktbereich und dem zweiten Kontaktbereich angeordnet ist und mit einer Fase und/oder einem Profil mit einem variablen Querschnitt, insbesondere mit einem sich verjüngenden Querschnitt, versehen ist. Durch den Fasenbereich wird die Geometrie des ersten Kontaktbereiches derart beeinflusst, dass die Übertragung des Drehmoments im ersten Kontaktbereich verstärkt ist.

In einer optionalen Ausführungsform ist der Fasenbereich derart angeordnet und ausgebildet, dass eine Übertragung des Drehmoments im zweiten Kontaktbereich verstärkt werden kann und gleichzeitig die Stabilität der Schraube erhöht ist.

Mindestens eine technische Wirkung des Aspekts ist, dass sowohl die Übertragung des Drehmoments verbessert werden kann, im Vergleich zu nur einem einzigen Kontaktbereich. Zudem kann auch die Stabilität der Schraube erhöht werden, da diese durch den Abstand der beiden Kontaktbereiche ein eventuelles Gegendrehmoment besser kompensieren kann. Zudem kann das Antriebselement genauer und einfacher in die Antriebsaufnahme des Schraubenkopfs eingeführt werden.

In einer weiteren Ausführungsform umfasst die Erfindung eine Schraube, wobei der erste Kontaktbereich eine erste Kontaktfläche umfasst, wobei die erste Kontaktfläche mindestens einen ersten Neigungswinkel entlang der Längsachse der Schraube umfasst, wobei der mindestens erste Neigungswinkel 1.4° ist oder einen Wert aus dem Bereich von 0.0° bis 1.4° annimmt.

Der Begriff "erste Kontaktfläche" beschreibt eine Fläche des Schraubenkopfes, insbesondere der Antriebsaufnahme, welche ausgebildet ist, eine Flankenkontaktfläche des Antriebselements zu kontaktieren. Der Kontakt zwischen der Flankenkontaktfläche des Antriebselements und der ersten Kontaktfläche des Schraubenkopfs erfolgt durch Einführen des Antriebselements in den Schraubenkopf.

Der Begriff "erste Kontaktfläche" umfasst mindestens eine erste Kontaktfläche, kann aber auch zwei, drei oder mehr erste Kontaktflächen umfassen. Bei mehr als einer ersten Kontaktfläche können die ersten Kontaktflächen räumlich getrennt oder zusammenhängend angeordnet sein. Die erste Kontaktfläche ermöglicht die Übertragung eines Drehmoments vom Antriebselement auf die Schraube, wodurch das Anziehen, das Eintreiben oder Lösen der Schraube ermöglicht wird.

Der Begriff "mindestens ein erster Neigungswinkel" beschreibt mindestens einen ersten Neigungswinkel der ersten Kontaktfläche entlang der Längsachse der Schraube und/oder entlang einer Achse, welche parallel zur Längsachse der Schraube, verläuft. In anderen Worten, der mindestens erste Neigungswinkel gibt an, ob die (mindestens) erste Kontaktfläche parallel zur Längsachse der Schraube verläuft (mindestens erster Neigungswinkel = 0.0°) oder zur Längsachse der Schraube geneigt ist (mindestens erster Neigungswinkel = >0°). Die Neigung des ersten Neigungswinkels verläuft dabei in Richtung des Schraubenendes und nicht in Richtung des Schraubenkopfes. In anderen Worten: Durch den mindestens ersten Neigungswinkel kann die erste Kontaktfläche in Richtung Längsachse der Schraube hin zum Schraubenende konvergieren. Die (mindestens) erste Kontaktfläche kann an unterschiedlichen Teilkontaktflächen der ersten Kontaktfläche unterschiedliche erste Neigungswinkel aufweisen. Somit umfasst die Erfindung nicht nur einen ersten, sondern mindestens einen ersten Neigungswinkel.

Mindestens eine technische Wirkung dieser weiteren Ausführungsform ist es, dass, insbesondere bei einem ersten Neigungswinkel von 1.4°, die Übertragung des Drehmoments zwischen Schraubenkopf und Antriebselement, signifikant verbessert ist.

In einer weiteren Ausführungsform umfasst die Erfindung eine Schraube, wobei der zweite Kontaktbereich eine zweite Kontaktfläche umfasst, wobei die zweite Kontaktfläche mindestens einen zweiten Neigungswinkel entlang der Längsachse der Schraube umfasst, wobei der zweite Neigungswinkel 3.0° ist oder einen Wert aus dem Bereich von 0.1° bis 6.0° annimmt.

Der Begriff "zweite Kontaktfläche" beschreibt eine Fläche des Schraubenkopfes, insbesondere der Antriebsaufnahme, welche ausgebildet ist, eine Einführungskontaktfläche des Antriebselements zu kontaktieren. Der Kontakt zwischen der Einführungskontaktfläche des Antriebselements und der zweiten Kontaktfläche des Schraubenkopfs erfolgt durch Einführen des Antriebselements in den Schraubenkopf.

Der Begriff "zweite Kontaktfläche" umfasst mindestens eine zweite Kontaktfläche, kann aber auch zwei, drei oder mehr zweite Kontaktflächen umfassen. Bei mehr als einer zweiten Kontaktfläche können die zweiten Kontaktflächen räumlich getrennt oder zusammenhängend angeordnet sein. Die zweite Kontaktfläche ermöglicht die Übertragung eines Drehmoments vom Antriebselement auf die Schraube, wodurch das Anziehen, das Eintreiben oder Lösen der Schraube ermöglicht wird.

Der Begriff "mindestens ein zweiter Neigungswinkel" beschreibt einen zweiten Neigungswinkel der zweiten Kontaktfläche entlang der Längsachse der Schraube und/oder entlang einer Achse, welche parallel zur Längsachse der Schraube verläuft. In anderen Worten, der mindestens zweite Neigungswinkel gibt an, wie die (mindestens) zweite Kontaktfläche parallel zur Längsachse der Schraube verläuft geneigt ist. Die Neigung des zweiten Neigungswinkels verläuft dabei in Richtung des Schraubenendes und nicht in Richtung des Schraubenkopfes. In anderen Worten: Durch den mindestens zweiten Neigungswinkel kann die zweite Kontaktfläche in Richtung Längsachse der Schraube hin zum Schraubenende konvergieren. Die (mindestens) zweite Kontaktfläche kann an unterschiedlichen Teilkontaktflächen der zweiten Kontaktfläche unterschiedliche zweite Neigungswinkel aufweisen. Somit umfasst die Erfindung nicht nur einen zweiten, sondern mindestens einen zweiten Neigungswinkel.

Mindestens eine technische Wirkung dieser weiteren Ausführungsform ist es, dass, insbesondere bei einem zweiten Neigungswinkel von 3.0°, die Einführung und die Führung eines Antriebselements, signifikant verbessert ist. Je kleiner der zweite Neigungswinkel ist, beispielsweise 0.1°, desto besser wird die Klemmwirkung zwischen der zweiten Kontaktfläche und dem Antriebselement. Jedoch wird dadurch die Führung des Antriebselements negativ beeinflusst. Je größer der zweite Neigungswinkel ist, beispielsweise 6.0°, desto schwächer wird die Klemmwirkung zwischen der zweiten Kontaktfläche und dem Antriebselement. Jedoch wird dadurch die Führung des Antriebselements positiv beeinflusst. In anderen Worten: Durch die Wahl eines zweiten Neigungswinkels im Bereich von 0.1° bis 6.0°, insbesondere 3.0°, ist eine gute Balance zwischen der Klemmwirkung (Schraube zu Antriebselement) und dem Einführen des Antriebselements in die Schraube gegeben.

In einer weiteren Ausführungsform umfasst die Erfindung eine Schraube, wobei das Verhältnis zwischen dem mindestens zweiten Neigungswinkel zu dem mindestens ersten Neigungswinkel größer gleich 1 ist oder größer gleich 1.5 ist oder 2.0 ist oder einen Wert aus dem Bereich von 1 bis 60 annimmt.

Ist das Verhältnis zwischen dem mindestens zweiten Neigungswinkel und dem mindestens ersten Neigungswinkel gleich eins, so nehmen der mindestens zweite Neigungswinkel und der mindestens erste Neigungswinkel den gleichen Wert an, beispielsweise 1.4°. In diesem Fall kann es sein, dass die Klemmung zuerst an der zweiten Kontaktfläche oder zuerst an der ersten Kontaktfläche entsteht.

Ist das Verhältnis zwischen dem mindestens zweiten Neigungswinkel und dem mindestens ersten Neigungswinkel größer eins, so nehmen der mindestens zweite Neigungswinkel und der mindestens erste Neigungswinkel unterschiedliche Werte an. In anderen Worten: Der mindestens zweite Neigungswinkel ist in diesem Fall größer als der mindestens erste Neigungswinkel. In diesem Fall entsteht die Klemmung zwischen der Schraube und dem Antriebselement zuerst an der zweiten Kontaktfläche.

Mindestens eine technische Wirkung dieser weiteren Ausführungsform ist es, dass sowohl die Führung des Antriebselements als auch die Klemmung des Antriebselements signifikant verbessert ist und die Schraube eine gute Robustheit gegenüber Fertigungstoleranzen aufweist.

In einer weiteren Ausführungsform umfasst die Erfindung eine Schraube, wobei die zweite Kontaktfläche eine effektive Länge entlang der Längsachse umfasst, wobei die effektive Länge 1.2 mm ist oder 1.5 mm ist oder einen Wert aus einem der folgenden Bereiche annimmt:
- 0.6 mm bis 2.4 mm,
- 0.7 mm bis 2.3 mm,
- 0.8 mm bis 2.2 mm,
- 0.9 mm bis 2.1 mm,
- 1.0 mm bis 2.0 mm,
- 1.1 mm bis 1.9 mm,
- 1.2 mm bis 1.8 mm,
- 1.3 mm bis 1.7 mm,
- 1.4 mm bis 1.6 mm.

Der Begriff "effektive Länge" beschreibt dabei die Länge der zweiten Kontaktfläche entlang der Längsachse der Schraube. Die effektive Länge der zweiten Kontaktfläche kann dabei kürzer sein als die eigentliche Länge der zweiten Kontaktfläche entlang der zweiten Kontaktfläche.

Mindestens eine technische Wirkung dieser weiteren Ausführungsform ist es, dass sowohl die Führung des Antriebselements als auch die Klemmung des Antriebselements signifikant verbessert ist und die Schraube eine gute Robustheit gegenüber Fertigungstoleranzen aufweist.

In einer weiteren Ausführungsform umfasst die Erfindung eine Schraube, wobei der Fasenbereich eine Fasenfläche umfasst, wobei die Fasenfläche einen Fasenwinkel zur Längsachse umfasst, wobei der Fasenwinkel 45° ist oder einen Wert aus dem Bereich von 30° bis 60° annimmt oder einen Wert aus dem Bereich von 40° bis 50° annimmt.

Der Begriff "Fasenfläche" beschreibt eine Fläche des Schraubenkopfes, insbesondere der Antriebsaufnahme, welche ausgebildet ist, eine Übertragung des Drehmoments im ersten Kontaktbereich und/oder im zweiten Kontaktbereich zu verstärken.

Der Begriff "Fasenfläche" umfasst mindestens eine erste Fasenfläche, kann aber auch zwei, drei oder mehr Fasenflächen umfassen. Bei mehr als einer Fasenfläche können die Fasenflächen räumlich getrennt oder zusammenhängend angeordnet sein. Die Fasenfläche ermöglicht die Übertragung eines Drehmoments vom Antriebselement auf die Schraube, wodurch das Anziehen, das Eintreiben oder Lösen der Schraube ermöglicht wird.

Der Begriff "Fasenwinkel" beschreibt einen mindestens einen Neigungswinkel der Fasenfläche entlang der Längsachse der Schraube. In anderen Worten, der (mindestens) eine Fasenwinkel gibt an, mit welcher Neigung die (mindestens) eine Fasenfläche zur Längsachse der Schraube verläuft. Die Neigung des (mindestens einen) Fasenwinkels verläuft dabei in Richtung des Schraubenendes und nicht in Richtung des Schraubenkopfes. In anderen Worten: Durch den Fasenwinkel kann die Fasenfläche in Richtung Längsachse der Schraube hin zum Schraubenende konvergieren. Die (mindestens) erste Fasenfläche kann an unterschiedlichen Teilkontaktflächen der ersten Fasenfläche unterschiedliche Fasenwinkel aufweisen. Somit umfasst die Erfindung nicht nur einen, sondern mindestens einen Fasenwinkel.

Mindestens eine technische Wirkung dieser weiteren Ausführungsform ist es, dass sowohl die Übertragung des Drehmoments im ersten Kontaktbereich und/oder im zweiten Kontaktbereich verbessert werden kann. Zudem kann auch die Stabilität der Schraube erhöht werden, da diese durch den Abstand zwischen dem ersten Kontaktbereich und dem zweiten Kontaktbereich, welchen die Fasenfläche erzeugt, ein Gegendrehmoment besser kompensieren werden kann.

In einer weiteren Ausführungsform umfasst die Erfindung eine Schraube, wobei die Fasenfläche eine obere Fasenfläche umfasst, wobei die obere Fasenfläche ausgebildet ist, um die erste Kontaktfläche zu vergrößern.

Der Begriff "obere Fasenfläche" beschreibt einen Teil der Fasenfläche der an den ersten Kontaktbereich, insbesondere die erste Kontaktfläche, angrenzt.

Der Ausdruck "wobei die obere Fasenfläche ausgebildet ist, um die erste Kontaktfläche zu vergrößern" beschreibt, dass durch die obere Fasenfläche Ausläufer an der ersten Kontaktfläche entstehen, wobei die Ausläufer die erste Kontaktfläche vergrößern. Es sei angemerkt, dass die obere Fasenfläche nicht Teil der ersten Kontaktfläche ist. Die Ausläufer, welche durch die obere Fasenfläche entstehen sind jedoch ein Teil der ersten Kontaktfläche.

Mindestens eine technische Wirkung dieser weiteren Ausführungsform ist es, dass die Übertragung des Drehmoments im ersten Kontaktbereich verbessert werden kann.

In einer weiteren Ausführungsform umfasst die Erfindung eine Schraube, wobei die Fasenfläche eine untere Fasenfläche umfasst, wobei die untere Fasenfläche ausgebildet ist, um einen Kontaktabstand zwischen der ersten Kontaktfläche und der zweiten Kontaktfläche zu vergrößern.

Der Begriff "untere Fasenfläche" beschreibt einen Teil der Fasenfläche der an den zweiten Kontaktbereich, insbesondere die zweite Kontaktfläche, angrenzt.

Der Begriff "Kontaktabstand" beschreibt einen Abstand zwischen dem ersten Kontaktbereich, insbesondere der ersten Kontaktfläche und dem zweiten Kontaktbereich, insbesondere der zweiten Kontaktfläche. Wobei der Kontaktabstand zwischen den beiden Bereichen (beziehungsweise Flächen) entlang der Längsrichtung der Schraube definiert ist. Dabei kann der Kontakt zwischen der Schraube und dem Antriebselement über die gesamte erste Kontaktfläche oder nur über einen Teil der ersten Kontaktfläche erfolgen. Dabei kann der Kontakt zwischen der Schraube und dem Antriebselement über die gesamte zweite Kontaktfläche oder nur über einen Teil der zweiten Kontaktfläche erfolgen.

Mindestens eine technische Wirkung dieser weiteren Ausführungsform ist es, dass die Stabilität der Schraube erhöht werden kann, da durch den Abstand zwischen dem ersten Kontaktbereich und dem zweiten Kontaktbereich, welchen die untere Fasenfläche erzeugt, ein Gegendrehmoment besser kompensieren werden kann.

In einer weiteren Ausführungsform umfasst die Erfindung eine Schraube, der Kontaktabstand mindestens einen Wert von 0.5 mm annimmt.

Mindestens eine technische Wirkung dieser weiteren Ausführungsform ist es, dass die Stabilität der Schraube erhöht werden kann, da durch den Abstand zwischen dem ersten Kontaktbereich und dem zweiten Kontaktbereich, welchen die untere Fasenfläche erzeugt, ein Gegendrehmoment besser kompensieren werden kann.

Ein zweiter Aspekt der Erfindung umfasst ein Antriebselement zum Eintreiben einer Schraube in einen Untergrund, umfassend:
- einen Antriebselementkörper,
- eine Längsachse entlang des Antriebselementkörpers,
- einen Antriebsbereich zum Einbringen des Antriebselements in eine Schraube, wobei der Antriebsbereich
   ▪ einen Flankenbereich, wobei der Flankenbereich ausgebildet ist einen ersten Kontaktbereich der Schraube zu kontaktieren,
   ▪ einen Einführungsbereich, wobei der Einführungsbereich ausgebildet ist einen zweiten Kontaktbereich der Schraube zu kontaktieren,
   ▪ einen Übergangsbereich, wobei der Übergangsbereich zwischen dem Flankenbereich und dem Einführungsbereich angeordnet ist und ausgebildet ist eine Übertragung des Drehmoments im Flankenbereich und/oder im Einführungsbereich zu verstärken, umfasst.

Die Begriffsdefinitionen des zweiten Aspektes sind identisch mit den Begriffsdefinitionen des ersten Aspektes.

Der Begriff "Flankenbereich" beschreibt einen Bereich des Antriebselements, insbesondere des Antriebsbereichs, welcher ausgebildet ist, einen ersten Kontaktbereich einer Schraube zu kontaktieren. Der Kontakt zwischen dem Flankenbereich des Antriebselements und dem Schraubenkopf kann dabei über mindestens einen Flankenbereich oder über mehrere Flankenbereiche erfolgen. Der mindestens eine oder die mehreren Flankenbereiche können zusammenhängend oder räumlich getrennt voneinander angeordnet sein. Der Flankenbereich ermöglicht die Übertragung eines Drehmoments vom Antriebselement auf die Schraube, wodurch das Anziehen, das Eintreiben oder Lösen der Schraube ermöglicht wird.

Der Begriff "Einführungsbereich" beschreibt einen Bereich des Antriebselements, insbesondere der Antriebsbereichs, welcher angeordnet ist und welcher ausgebildet ist, einen zweiten Kontaktbereich einer Schraube zu kontaktieren. Der Kontakt zwischen dem Einführungsbereich des Antriebselements und dem Schraubenkopf kann dabei über mindestens einen Einführungsbereich oder über mehrere Einführungsbereiche erfolgen. Der mindestens eine oder die mehreren Einführungsbereiche können zusammenhängend oder räumlich getrennt voneinander angeordnet sein. Der Einführungsbereich ermöglicht es die Übertragung des Drehmoments vom Antriebselement auf die Schraube zu verbessern und zu verstärken, wodurch das Anziehen, das Eintreiben oder Lösen der Schraube ermöglicht wird.

Der Begriff "Übergangsbereich" beschreibt einen Bereich, der zwischen dem Flankenbereich und dem Einführungsbereich angeordnet ist und mit einer Fase und/oder einem Profil mit einem variablen Querschnitt, insbesondere mit einem sich verjüngenden Querschnitt, versehen ist. Durch das Aufbringen der Fase wird die Geometrie des Flankenbereichs derart beeinflusst, dass die Übertragung des Drehmoments vom Antriebselement auf eine Schraube im Flankenbereich und/oder Einführungsbereich verstärkt ist.

In einer optionalen Ausführungsform ist der Übergangsbereich derart angeordnet und ausgebildet, dass eine Übertragung des Drehmoments im Einführungsbereich verstärkt werden kann und gleichzeitig die Stabilität des Antriebselements erhöht ist.

Mindestens eine technische Wirkung des Aspekts ist, dass sowohl die Übertragung des Drehmoments verbessert werden kann. Zudem kann auch die Stabilität des Antriebselements erhöht werden, da diese durch den Abstand zwischen dem Flankenbereich und dem Einführungsbereich, ein eventuelles Gegendrehmoment besser kompensieren kann. Zudem kann das Antriebselement genauer und einfacher in die Antriebsaufnahme des Schraubenkopfs eingeführt werden.

In einer weiteren Ausführungsform umfasst die Erfindung ein Antriebselement, wobei der Flankenbereich eine Flankenkontaktfläche umfasst, wobei die Flankenkontaktfläche mindestens einen ersten Flankenneigungswinkel entlang der Längsachse des Antriebselements umfasst, wobei der mindestens erste Flankenneigungswinkel 1.4° ist oder einen Wert aus dem Bereich von 0.0° bis 1.4° annimmt.

Der Begriff "Flankenkontaktfläche" beschreibt eine Fläche des Antriebselements, insbesondere des Antriebsbereichs, welche ausgebildet ist, eine erste Kontaktfläche der Schraube zu kontaktieren. Der Kontakt zwischen der Flankenkontaktfläche des Antriebselements und der ersten Kontaktfläche des Schraubenkopfs erfolgt durch Einführen des Antriebselements in den Schraubenkopf.

Der Begriff "Flankenkontaktfläche" umfasst mindestens eine Flankenkontaktfläche, kann aber auch zwei, drei oder mehr Flankenkontaktfläche umfassen. Bei mehr als einer Flankenkontaktfläche können die Flankenkontaktflächen räumlich getrennt oder zusammenhängend angeordnet sein. Die Flankenkontaktfläche ermöglicht die Übertragung eines Drehmoments vom Antriebselement auf die Schraube, wodurch das Anziehen, das Eintreiben oder Lösen der Schraube ermöglicht wird.

Der Begriff "mindestens ein erster Flankenneigungswinkel" beschreibt einen ersten Flankenneigungswinkel der Flankenkontaktfläche entlang der Längsachse des Antriebselements und/oder entlang einer Achse, welche parallel zur Längsachse der Antriebselements verläuft. In anderen Worten, der mindestens erste Flankenneigungswinkel gibt an, ob die (mindestens) eine Flankenkontaktfläche parallel zur Längsachse des Antriebselements verläuft (mindestens erster Flankenneigungswinkel = 0.0°) oder zur Längsachse der des Antriebselements geneigt ist (mindestens erster Flankenneigungswinkel = >0°). Die Neigung des ersten Flankenneigungswinkel verläuft dabei in Richtung des Übergangsbereichs. In anderen Worten: Durch den mindestens ersten Flankenneigungswinkel kann die erste Flankenkontaktfläche in Richtung Längsachse der Antriebelements hin zum Übergangsberiech konvergieren. Die (mindestens) erste Flankenkontaktfläche kann an unterschiedlichen Teilkontaktflächen der ersten Flankenkontaktfläche unterschiedliche erste Flankenneigungswinkel aufweisen. Somit umfasst die Erfindung nicht nur einen ersten, sondern mindestens einen ersten Flankenneigungswinkel.

Mindestens eine technische Wirkung dieser weiteren Ausführungsform ist es, dass, insbesondere bei einem ersten Flankenneigungswinkel von 1.4°, die Übertragung des Drehmoments zwischen Schraubenkopf und Antriebselement, signifikant verbessert ist.

In einer weiteren Ausführungsform umfasst die Erfindung ein Antriebselement, wobei der Einführungsbereich eine Einführungskontaktfläche umfasst, wobei die Einführungskontaktfläche mindestens einen Einführungsneigungswinkel entlang der Längsachse des Antriebselements umfasst, wobei der Einführungsneigungswinkel 3.0° ist oder einen Wert aus dem Bereich von 0.1° bis 6.0° annimmt.

Der Begriff "Einführungskontaktfläche" beschreibt eine Fläche des Antriebselements, insbesondere des Antriebsbereichs, welche ausgebildet ist, eine zweite Kontaktfläche der Schraube zu kontaktieren. Der Kontakt zwischen der Einführungskontaktfläche des Antriebselements und der zweiten Kontaktfläche des Schraubenkopfs erfolgt durch Einführen des Antriebselements in den Schraubenkopf.

Der Begriff "Einführungskontaktfläche" umfasst mindestens eine Einführungskontaktfläche, kann aber auch zwei, drei oder mehr Einführungskontaktflächen umfassen. Bei mehr als einer Einführungskontaktfläche können die Einführungskontaktfläche räumlich getrennt oder zusammenhängend angeordnet sein. Die Einführungskontaktfläche ermöglicht die Übertragung eines Drehmoments vom Antriebselement auf die Schraube, wodurch das Anziehen, das Eintreiben oder Lösen der Schraube ermöglicht wird.

Der Begriff "Einführungsneigungswinkel" beschreibt einen Neigungswinkel der Einführungskontaktfläche entlang der Längsachse des Antriebselements und/oder entlang einer Achse, welche parallel zur Längsachse des Antriebselements verläuft. In anderen Worten, der mindestens eine Einführungsneigungswinkel gibt an, wie die (mindestens) eine Einführungskontaktfläche zur Längsachse der Antriebselements geneigt ist. Die Neigung des Einführungsneigungswinkel verläuft dabei in Richtung des Endes des Antriebselements. Die (mindestens) eine Einführungskontaktfläche kann an unterschiedlichen Teilkontaktflächen der Einführungskontaktfläche unterschiedliche Einführungsneigungswinkel aufweisen. Somit umfasst die Erfindung nicht nur einen, sondern mindestens einen Einführungsneigungswinkel.

Mindestens eine technische Wirkung dieser weiteren Ausführungsform ist es, dass, insbesondere bei einem Einführungsneigungswinkel von 3.0°, die Einführung und die Führung eines Antriebselements, signifikant verbessert ist. Je kleiner der Einführungsneigungswinkel ist, beispielsweise 0.1°, desto besser wird die Klemmwirkung zwischen der zweiten Kontaktfläche der Schraube und dem Antriebselement. Jedoch wird dadurch die Führung des Antriebselements negativ beeinflusst. Je größer der Einführungsneigungswinkel ist, beispielsweise 6.0°, desto schwächer wird die Klemmwirkung zwischen der zweiten Kontaktfläche der Schraube und dem Antriebselement. Jedoch wird dadurch die Führung des Antriebselements positiv beeinflusst. In anderen Worten: Durch die Wahl eines Einführungsneigungswinkel im Bereich von 0.1° bis 6.0°, insbesondere 3.0°, ist eine gute Balance zwischen der Klemmwirkung (Schraube zu Antriebselement) und dem Einführen des Antriebselements in die Schraube gegeben.

In einer weiteren Ausführungsform umfasst die Erfindung ein Antriebselement, wobei das Verhältnis zwischen dem mindestens einen Einführungsneigungswinkel zu dem mindestens einen Flankenneigungswinkel größer gleich 1 ist oder größer gleich 1.5 ist oder 2.0 ist oder einen Wert aus dem Bereich von 1 bis 60 annimmt.

Ist das Verhältnis zwischen dem mindestens einem Einführungskontaktwinkel und dem mindestens einem Flankenneigungswinkel gleich eins, so nehmen der mindestens eine Einführungskontaktwinkel und der mindestens Flankenneigungswinkel den gleichen Wert an, beispielsweise 1.4°. In diesem Fall kann es sein, dass die Klemmung zuerst an der Einführungskontaktfläche oder zuerst an der Flankenkontaktfläche entsteht.

Ist das Verhältnis zwischen dem mindestens einem Einführungskontaktwinkel und dem mindestens einen Flankenneigungswinkel größer eins, so nehmen der mindestens eine Einführungskontaktwinkel und der mindestens eine Flankenneigungswinkel unterschiedliche Werte an. In anderen Worten: Der mindestens eine Einführungskontaktwinkel ist in diesem Fall größer als der eine Flankenneigungswinkel. In diesem Fall entsteht die Klemmung zwischen der Schraube und dem Antriebselement zuerst an der Einführungskontaktfläche.

Mindestens eine technische Wirkung dieser weiteren Ausführungsform ist es, dass sowohl die Führung des Antriebselements als auch die Klemmung des Antriebselements signifikant verbessert ist und das Antriebselement eine gute Robustheit gegenüber Fertigungstoleranzen aufweist. Außerdem kann das Antriebselement für Schrauben unterschiedlicher Größen, insbesondere unterschiedlicher Durchmesser und/oder unterschiedlich großer Schraubenkopfdurchmesser, verwendet werden.

In einer weiteren Ausführungsform umfasst die Erfindung ein Antriebselement, wobei der Übergangsbereich eine Übergangsfläche umfasst, wobei die Übergangsfläche eine obere Übergangsfläche umfasst, wobei die obere Übergangsfläche ausgebildet ist, um eine Übertragung des Drehmoments im Flankenbereich zu verstärken.

Der Begriff "obere Übergangsfläche" beschreibt einen Teil der Übergangsfläche der an den Flankenbereich, insbesondere die Flankenkontaktfläche, angrenzt.

Der Ausdruck "wobei die obere Übergangsfläche ausgebildet ist, um eine Übertragung des Drehmoments im Flankenbereich zu verstärken" beschreibt, dass durch die obere Übergangsfläche Ausläufer an der Flankenkontaktfläche entstehen, wobei die Ausläufer die Flankenkontaktfläche vergrößern. Es sei angemerkt, dass die obere Übergangsfläche nicht Teil der Flankenkontaktfläche ist. Die Ausläufer, welche durch die obere Übergangsfläche entstehen sind jedoch ein Teil der ersten Flankenkontaktfläche.

Mindestens eine technische Wirkung dieser weiteren Ausführungsform ist es, dass die Übertragung des Drehmoments im Flankenbereich verbessert werden kann.

In einer weiteren Ausführungsform umfasst die Erfindung ein Antriebselement, wobei die Übergangsfläche eine untere Übergangsfläche umfasst, wobei die untere Übergangsfläche ausgebildet ist, um einen Hebelabstand zwischen der Flankenkontaktfläche und der Einführungskontaktfläche zu vergrößern.

Der Begriff "untere Übergangsfläche" beschreibt einen Teil der Übergangsfläche der an den Einführungsbereich, insbesondere die Einführungskontaktfläche, angrenzt.

Der Begriff "Hebelabstand" beschreibt einen Abstand zwischen dem Flankenbereich, insbesondere der Flankenkontaktfläche und dem Einführungsbereich, insbesondere der Einführungskontaktfläche. Wobei der Hebelabstand zwischen den beiden Bereichen (beziehungsweise Flächen) entlang der Längsrichtung des Antriebselements definiert ist.

Mindestens eine technische Wirkung dieser weiteren Ausführungsform ist es, dass die Stabilität des Antriebselements erhöht werden kann, da durch den Abstand zwischen dem Flankenbereich und dem Einführungsbereich, welchen die untere Übergangsfläche erzeugt, ein Gegendrehmoment besser kompensieren werden kann.

Es folgen weitere optionale Ausführungsformen welche beliebig mit allen bisherigen Ausführungsformen des ersten und zweiten Aspektes und auch mit allen weiteren optionalen Ausführungsformen des ersten und zweiten Aspektes kombiniert oder spezifiziert werden können.

In einer weiteren optionalen Ausführungsform umfasst die Erfindung eine Schraube, wobei der zweite Neigungswinkel gleich groß ist wie der erste Neigungswinkel oder der zweite Neigungswinkel größer ist als der erste Neigungswinkel.

Mindestens eine technische Wirkung dieser weiteren optionalen Ausführungsform ist, dass eine bessere Drehmomentübertragung und/oder eine bessere Führung der Schraube ermöglicht ist.

In einer weiteren optionalen Ausführungsform umfasst die Erfindung eine Schraube, wobei die zweite Kontaktfläche ausgebildet ist, einen Einführungsbereich des Antriebselements umfassend eine Außenkontur zu kontaktieren, wobei die Außenkontur des Einführungsbereichs ein Viereck, vorzugsweise ein regelmäßiges Viereck, ist oder ein Fünfeck ist oder ein Sechseck ist oder ein Innensechsrund ist.

Mindestens eine technische Wirkung dieser weiteren optionalen Ausführungsform ist, dass die Drehmomentübertragung durch die Erweiterung der zweiten Kontaktfläche weiter verbessert ist.

In einer weiteren optionalen Ausführungsform umfasst die Erfindung eine Schraube, wobei die untere Fasenfläche, mindestens eine Teilfläche umfasst, wobei die mindestens eine Teilfläche geneigt zur Längsachse der Schraube ist oder parallel zur Längsachse der Schraube ist.

Mindestens eine technische Wirkung dieser weiteren optionalen Ausführungsform ist, dass der Kontaktabstand vergrößert und somit die mögliches Gegenmoment besser kompensiert wird.

In einer weiteren optionalen Ausführungsform umfasst die Erfindung eine Schraube, wobei der zweite Kontaktbereich mindestens einen Radius umfasst, wobei der mindestens eine Radius 1.45 mm ist oder mindestens einen Wert aus einem der folgenden Bereiche aufweist:
- 0.5 mm bis 2.5 mm,
- 1.0 mm bis 2 mm,
- 1.25 mm bis 1.75 mm.

In einer weiteren optionalen Ausführungsform umfasst die Erfindung eine Schraube, wobei die Schraube eine effektive Eindringtiefe entlang der Längsachse umfasst, wobei das Verhältnis der effektiven Länge zur effektiven Eindringtiefe mindestens einen der folgenden Werte annimmt:
- 5%,
- 10%,
- 15%,
- 20%,
- 25%,
- 30%,
- 35%,
- 40%,
- 45%.
- 50%.

Der Begriff "effektive Eindringtiefe" umfasst eine effektive Tiefe entlang der Längsachse der ersten Kontaktfläche und eine effektive Tiefe entlang der Längsachse der Fasenfläche und die effektive Länge.

### Ausführungsbeispiele

Die Erfindung wird nachstehend anhand von Ausführungsbeispielen unter Bezugnahme auf die Zeichnungen näher erläutert.
Figur 1 zeigt eine Schraube im Längsschnitt.
Figur 2 zeigt ein Antriebselement in einer Seitenansicht.

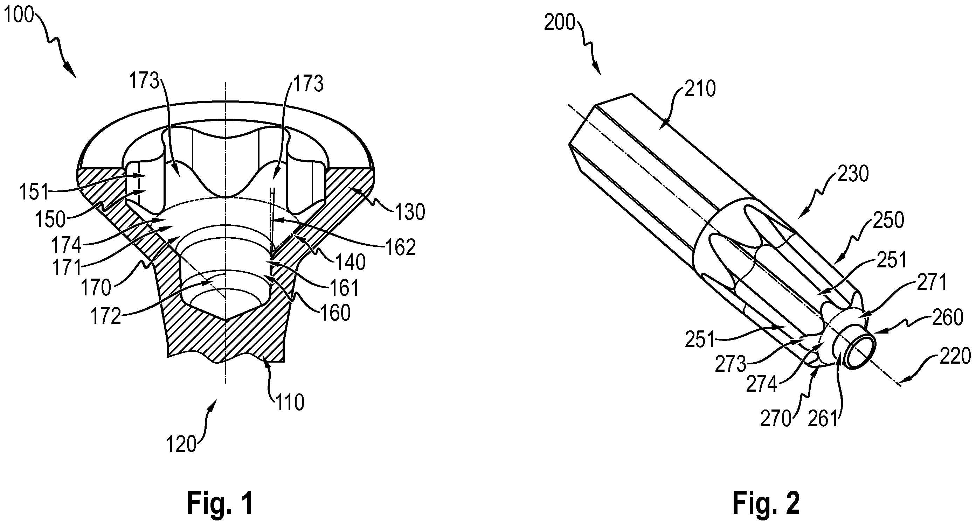

**Figur 1** zeigt eine Schraube 100 im Längsschnitt. Die Schraube 100 umfasst einen Schraubenschaft 110, eine Längsachse 120, einen Schraubenkopf 130 und eine Antriebsaufnahme 140. In Figur 1 ist nicht der gesamte Schraubenschaft 110 dargestellt, insbesondere ist das Gewinde der Schraube 100 nicht dargestellt.

Die Antriebsaufnahme 140 ist in drei Bereiche unterteilt: einen ersten Kontaktbereich 150, einen zweiten Kontaktbereich 160 und einen Fasenbereich 170.

Der erste Kontaktbereich 150 umfasst in dieser Ausführungsform genau eine erste Kontaktfläche 151. Die erste Kontaktfläche 151 ist derart ausgebildet, dass ein Antriebselement (hier nicht gezeigt) direkt mit der ersten Kontaktfläche 151 kontaktiert werden kann. Die erste Kontaktfläche 151 weist einen ersten Neigungswinkel von 1.0° auf. Aus Darstellungsgründen ist der erste Neigungswinkel in Figur 1 nicht eingezeichnet.

Der zweite Kontaktbereich 160 umfasst in dieser Ausführungsform genau eine zweite Kontaktfläche 161. Diese zweite Kontaktfläche 161 weist einen zweiten Neigungswinkel 162 von 3° auf.

Der Fasenbereich 170 weist eine Fasenfläche 171 auf. Die Fasenfläche 171 ist dabei in eine untere Fasenfläche 174 und eine obere Fasenfläche 173 unterteilt. Der Fasenbereich weist zudem einen Fasenwinkel 172 von 45° auf.

**Figur 2** zeigt ein Antriebselement 200 in einer Seitenansicht. Das Antriebselement 200 umfasst ein Kontaktkörper 210, eine Längsachse 220 und einen Antriebsbereich 230.

Der Antriebsbereich 230 ist in drei Bereiche unterteilt: einen Flankenbereich 250, einen Einführungsbereich 260 und einen Übergangsbereich 270.

Der Flankenbereich 250 umfasst in dieser Ausführungsform eine Flankenkontaktfläche 251. Die Flankenkontaktfläche 251 ist derart ausgebildet, dass das Antriebselement 200 direkt mit einer ersten Kontaktfläche 151 der Schraube 100 kontaktiert werden kann. Die Flankenkontaktfläche 251 weist einen ersten Flankenneigungswinkel von 1.0° auf. Aus Darstellungsgründen ist der erste Flankenneigungswinkel in Figur 2 nicht eingezeichnet.

Der Einführungsbereich 260 umfasst in dieser Ausführungsform eine Einführungskontaktfläche 261. Diese Einführungskontaktfläche 261 weist einen Einführungsneigungswinkel von 3° auf. Aus Darstellungsgründen ist der Einführungsneigungswinkel in Figur 2 nicht eingezeichnet.

Der Übergangsbereich 270 weist eine Übergangsfläche 271 auf. Die Übergangsfläche 271 ist dabei in eine obere Übergansfläche 273 und eine untere Übergangsfläche 274 unterteilt.

## Patentansprüche

1. Schraube zum Eintreiben in einen Untergrund, umfassend:
- einen Schraubenschaft,
- eine Längsachse entlang des Schraubenschafts,
- einen Schraubenkopf, wobei der Schraubenkopf eine Antriebsaufnahme zum Aufnehmen eines Antriebselements umfasst, wobei die Antriebsaufnahme
▪ einen ersten Kontaktbereich, wobei der erste Kontaktbereich ausgebildet ist einen Flankenbereich des Antriebselements zu kontaktieren,
▪ einen zweiten Kontaktbereich, wobei der zweite Kontaktbereich ausgebildet ist einen Einführungsbereich des Antriebselements zu kontaktieren,
▪ einen Fasenbereich, wobei der Fasenbereich zwischen dem ersten Kontaktbereich und dem zweiten Kontaktbereich angeordnet ist und ausgebildet ist eine Übertragung des Drehmoments im ersten Kontaktbereich und/oder im zweiten Kontaktbereich zu verstärken, umfasst.

2. Schraube nach dem vorangegangenen Anspruch, wobei der erste Kontaktbereich eine erste Kontaktfläche umfasst, wobei die erste Kontaktfläche mindestens einen ersten Neigungswinkel entlang der Längsachse der Schraube umfasst, wobei der mindestens erste Neigungswinkel 1.4° ist oder einen Wert aus dem Bereich von 0.0° bis 1.4° annimmt.

3. Schraube nach einem der vorangegangenen Ansprüche, wobei der zweite Kontaktbereich eine zweite Kontaktfläche umfasst, wobei die zweite Kontaktfläche mindestens einen zweiten Neigungswinkel entlang der Längsachse der Schraube umfasst, wobei der zweite Neigungswinkel 3.0° ist oder einen Wert aus dem Bereich von 0.1° bis 6.0° annimmt.

4. Schraube nach Anspruch 3, wobei das Verhältnis zwischen dem mindestens zweiten Neigungswinkel zu dem mindestens ersten Neigungswinkel größer gleich 1 ist oder größer gleich 1.5 ist oder 2.0 ist oder einen Wert aus dem Bereich von 1 bis 60 annimmt.

5. Schraube nach einem der Ansprüche 3 bis 4, wobei die zweite Kontaktfläche eine effektive Länge entlang der Längsachse umfasst, wobei die effektive Länge 1.2 mm ist oder 1.5 mm ist oder einen Wert aus einem der folgenden Bereiche annimmt:
- 0.6 mm bis 2.4 mm,
- 0.7 mm bis 2.3 mm,
- 0.8 mm bis 2.2 mm,
- 0.9 mm bis 2.1 mm,
- 1.0 mm bis 2.0 mm,
- 1.1 mm bis 1.9 mm,
- 1.2 mm bis 1.8 mm,
- 1.3 mm bis 1.7 mm,
- 1.4 mm bis 1.6 mm.

6. Schraube nach einem der vorangegangenen Ansprüche, wobei der Fasenbereich eine Fasenfläche umfasst, wobei die Fasenfläche einen Fasenwinkel zur Längsachse umfasst, wobei der Fasenwinkel 45° ist oder einen Wert aus dem Bereich von 30° bis 60° annimmt oder einen Wert aus dem Bereich von 40° bis 50° annimmt.

7. Schraube nach dem vorangegangenen Anspruch, wobei die Fasenfläche eine obere Fasenfläche umfasst, wobei die obere Fasenfläche ausgebildet ist, um die erste Kontaktfläche zu vergrößern.

8. Schraube nach einem der Ansprüche 6 oder 7, wobei die Fasenfläche eine untere Fasenfläche umfasst, wobei die untere Fasenfläche ausgebildet ist, um einen Kontaktabstand zwischen der ersten Kontaktfläche und der zweiten Kontaktfläche zu vergrößern.

9. Schraube nach Anspruch 8, wobei der Kontaktabstand mindestens einen Wert von 0.5 mm annimmt.

10. Antriebselement zum Eintreiben einer Schraube in einen Untergrund, umfassend:
- einen Antriebselementkörper,
- eine Längsachse entlang des Antriebselementkörpers,
- einen Antriebsbereich zum Einbringen des Antriebselements in eine Schraube, wobei der Antriebsbereich
▪ einen Flankenbereich, wobei der Flankenbereich ausgebildet ist einen ersten Kontaktbereich der Schraube zu kontaktieren,
▪ einen Einführungsbereich, wobei der Einführungsbereich ausgebildet ist einen zweiten Kontaktbereich der Schraube zu kontaktieren,
▪ einen Übergangsbereich, wobei der Übergangsbereich zwischen dem Flankenbereich und dem Einführungsbereich angeordnet ist und ausgebildet ist eine Übertragung des Drehmoments im Flankenbereich und/oder im zweiten Kontaktbereich zu verstärken, umfasst.

11. Antriebselement nach dem vorangegangenen Anspruch, wobei der Flankenbereich eine Flankenkontaktfläche umfasst, wobei die Flankenkontaktfläche mindestens einen ersten Flankenneigungswinkel entlang der Längsachse des Antriebselements umfasst, wobei der mindestens erste Flankenneigungswinkel 1.4° ist oder einen Wert aus dem Bereich von 0.0° bis 1.4° annimmt.

12. Antriebselement nach einem der Ansprüche 10 oder 11, wobei der Einführungsbereich eine Einführungskontaktfläche umfasst, wobei die Einführungskontaktfläche mindestens einen Einführungsneigungswinkel entlang der Längsachse des Antriebselements umfasst, wobei der Einführungsneigungswinkel 3.0° ist oder einen Wert aus dem Bereich von 0.1° bis 6.0° annimmt.

13. Antriebselement nach Anspruch 12, wobei das Verhältnis zwischen dem mindestens einen Einführungsneigungswinkel zu dem mindestens einen Flankenneigungswinkel größer gleich 1 ist oder größer gleich 1.5 ist oder 2.0 ist oder einen Wert aus dem Bereich von 1 bis 60 annimmt.

14. Antriebselement nach einem der Ansprüche 10 bis 13, wobei der Übergangsbereich eine Übergangsfläche umfasst, wobei die Übergangsfläche eine obere Übergangsfläche umfasst, wobei die obere Übergangsfläche ausgebildet ist, um eine Übertragung des Drehmoments im Flankenbereich zu verstärken.

15. Antriebselement nach Anspruch 14, wobei die Übergangsfläche eine untere Übergangsfläche umfasst, wobei die untere Übergangsfläche ausgebildet ist, um einen Hebelabstand zwischen der Flankenkontaktfläche und der Einführungskontaktfläche zu vergrößern.
